# EUROPEAN PATENT SPECIFICATION

(11) **EP 2 729 314 B1**
(45) Date of publication and mention of the grant of the patent: **06.04.2016**
(21) Application number: 11738391.9
(22) Date of filing: 06.07.2011
(51) Int. Cl.: B60C 11/03, B60C 11/04

(54) **MOTORCYCLE TYRES**
MOTORRADREIFEN
PNEUS DE MOTOCYCLES

(43) Date of publication of application: 14.05.2014
(73) Proprietor: Pirelli Tyre S.p.A., 20126 Milano (IT)
(72) Inventor: MUNIZ, Fabio, Guerra, I-20126 Milano (IT); ALVES, Luiz, Felipe, Pestana, Pinto, 09111-310 Santo André- SP (BR)
(74) Representative: Fabiano, Piero
(86) International application number: PCT/BR2011/000208
(87) International publication number: WO 2013/003915

(56) References cited:
- EP-A2- 0 928 707
- WO-A1-2009/153822
- WO-A1-2010/073280
- WO-A1-2010/073281

## Description

The present invention relates to a motorcycle tyre, i.e. a tyre having a high transversal curvature so as to offer an adequate contact surface with the road surface when the motorcycle is leaning to turn a bend.

Tyres for wheels of motorcycles should ensure a high versatility of use both when driving in a straight line and bending. In particular, the tyres should always ensure high traction and grip on the road surface, in order to allow an optimal transfer of power and an adequate braking action, also with a load of two people, and on any type of road surface (wet, dry, regular and/or irregular asphalt, etc.) and/or route (city streets, motorways, mountain roads with a large number of bends, etc.).

Such tyres should also ensure comfort, driving stability, controllability, directionality, road-holding, high mileage and regular wear.

The behaviour of the tyres during travel is greatly influenced by the number, orientation, distribution and shape of the grooves formed on the tread band, and thus by the particular pattern of such a tread band.

In the technical field of the invention were also known documents WO2010/07328 and WO2009/153822 defining the general state of the art.

In particular, tyres for agile motorcycles having low engine displacement (e.g. 150 cc) often have tread patterns with a high number of grooves. This is because this kind of tyres does not typically use tread compounds having high hysteresis properties, so that the grip is normally triggered by the movement of the solid rubber portions comprised between the grooves. Such rubber portions have quite small size and consequently low rigidity, due to the high number of grooves formed in the tread band.

The aforementioned grooves also promote the draining of water in case of travel on a wet road surface.

However, such high number of grooves tends to weaken the rigidity, due to the high number of grooves formed in the tread band.

The aforementioned grooves also promote the draining of water in case of travel on a wet road surface.

However, such high number of grooves tends to weaken the structure of the tread band, making it more subject to wear and low mileage. The numerous grooves also generate noise and vibrations.

The Applicant has tackled the problem of providing motorcycle tyres suited for agile motorcycles having low engine displacement, being able to satisfy at least the following conflicting requirements: ensuring high grip performances without the need of special tread compounds having high hysteresis properties; being safe in travelling on wet paved surfaces; ensuring high mileage and regular wear.

The Applicant has found that this problem can be solved by providing the tyre tread band with a tread pattern using a lower number of grooves. In particular, some grooves extend substantially in transverse direction from one lateral region of the tread band to the other lateral region of the tread band; other grooves extend substantially in longitudinal direction within a central region of the tread band. Solid portions are also located within the central region of the tread band and alternate with the latter grooves in longitudinal direction.

In particular, it has been found that these tyres could greatly improve the mileage without impairing (or even improving) the grip, without the need of using compounds having high hysteresis properties.

Moreover, it has also been found that these tyres perform particularly well during travel on wet paves.

It has also been found that advantageously such tread pattern can be effectively used either for tyres adapted for fitting on the front or on the rear wheel of a motorcycle.

The present invention thus relates to a motorcycle tyre comprising a tread band.

By "motorcycle tyre" it is meant a tyre having a high curvature ratio (typically greater than or equal to about 0.200), capable of reaching high camber angles when the motorcycle leans on a bend. By "curvature ratio" of the motorcycle tyre it is meant the ratio of the distance between the radially highest point of the tread band and the line encompassing the maximum width of the tyre, to the maximum tyre width itself, in a cross section of the tyre.

In preferred aspects thereof, the invention has one or more of the following preferred features.

The motorcycle tyre has a section width comprised between about 70 and about 110 mm. By "section width" of the tyre it is meant the maximum width of the tyre in a cross section thereof.

The motorcycle tyre has a height comprised between about 80% and about 110% of the section width. By "height" of the tyre it is meant the maximum height of the tyre in a cross section thereof, i.e. the distance between the radially innermost bead portion adapted to abut to the rim seat and the radially highest point of the tyre.

The tread band comprises a central region and two lateral regions. The central region extends across the equatorial plane of the tyre, whereas the lateral regions extend laterally to the central region.

Particularly, the central region of the tread band may have a lateral extension comprised between about 10% and about 40% of the whole lateral extension of the tread band. By "lateral extension" of the tread band or of a region thereof it is meant the length of the arc defining the radially outermost profile of the tread band or of said region thereof in a cross section of the tyre.

A tread pattern is formed on the tread band.

The tread pattern may define on said tread band a void to rubber ratio lower than about 20%, so as to keep the total number of grooves quite low. The tread pattern may preferably define on said tread band a void to rubber ratio greater than about 10%, so as to trigger a good grip without the need of using special compounds having high hysteresis properties. Particularly, the tread pattern may define a void to rubber ratio lower than about 25% on the central region of the tread band. This may improve stability of the tyres, particularly during straight running. By "void to rubber ratio" it is meant the ratio between the overall surface of the empty spaces (typically formed by grooves) of a given portion of the tyre tread pattern (possibly of the whole tread pattern) and the overall surface of the same given portion of the tread pattern (respectively of the whole tread pattern).

The tread pattern may comprise a plurality of first grooves. The first grooves substantially continuously extend in transverse direction from the first to the second lateral region of the tread band. Particularly, the first grooves may extend substantially from the first lateral end of said tread band to the second lateral end of said tread band.

The first grooves may comprise at least a first portion having an inclination not higher than about 60°. The first grooves may also comprise at least a second portion having an inclination higher than about 50° substantially at the equatorial plane (X-X) of the tyre. By "inclination" of a groove or of a groove portion it is meant an inclination (expressed in terms of angle comprised between 0° and 90°) of the groove or the groove portion versus the equatorial plane of the tyre or versus a plane parallel to the equatorial plane of the tyre.

The tread pattern may further comprise a plurality of second grooves. The second grooves extend substantially in longitudinal direction within the central region of the tread band. The second grooves may start from a respective first groove. By "substantially in longitudinal direction", it is meant a direction having a low inclination versus the equatorial plane of the tyre (e.g., of less than about 30°).

Solid portions are located within the central region (particularly in a region located across the equatorial plane of the tyre) and alternate with said second grooves in longitudinal direction.

The tread pattern may further comprise a plurality of third grooves. The third grooves extend in transverse direction within the lateral regions of the tread band. The third grooves may start from a respective first groove. The third grooves may have an inclination higher than about 70° in at least one portion thereof, preferably substantially for their whole length.

The tread pattern may further comprise a plurality of fourth grooves. The fourth grooves extend in transverse direction within the lateral regions of the tread band. The fourth grooves may have an inclination comprised between about 20° and about 70°. In preferred embodiments, the fourth grooves may be located between two consecutive first grooves. For example, the fourth grooves may extend substantially parallel to the circumferentially adjacent first grooves in the lateral regions of the tread band.

Further features and advantages of the tyre of the present invention shall become clearer from the following detailed description of some exemplary embodiments thereof, made with reference to the attached drawings given just as non-limiting examples. In such drawings:
figure 1 shows a radial section view of a tyre according to the invention;
figure 2 shows a portion of a first exemplary tread pattern usable on a tread band of a tyre according to the present invention;
figure 3 shows a portion of a second exemplary tread pattern usable on a tread band of a tyre according to the present invention;
figure 4 shows the trend of the void to rubber ratio for the tread pattern shown in figure 2;
figure 5 shows the result of a test of mileage evaluation performed with a motorcycle tyre equipped with tyres according to the invention and tyres currently sold by the Applicant.

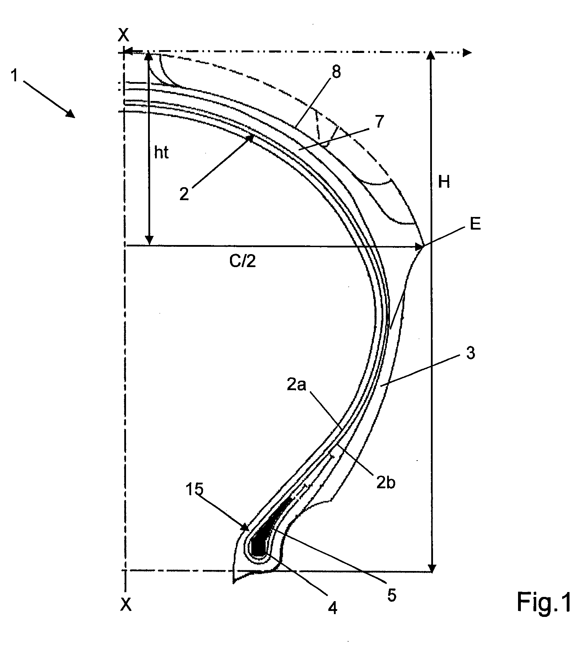

In figure 1, a tyre for wheels of motor vehicles according to the present invention is globally indicated with 1 and shown in partial cross section. The remaining portion of the tyre 1 is not shown in figure 1 as being symmetrically substantially identical to the shown portion. In particular, the tyre 1 is adapted for fitting on agile motorcycles having low engine displacement (generally lower than 300 cc, e.g. 150 cc).

In the tyre 1 an equatorial plane X-X is defined as the plane orthogonal to the rotation axis of the tyre 1 which subdivides the tyre 1 in two halves.

The tyre 1 comprises a carcass structure 2, comprising at least one carcass ply, which will be described later on in greater detail.

The carcass structure 2 is preferably coated on the inner walls thereof with a so-called "liner", comprising a layer of airtight elastomeric material, suitable for ensuring the hermetic seal of the tyre itself once inflated.

The carcass 2 is engaged, at the axially opposite side edges, with respective annular reinforcing structures 4 intended to hold the tyre on a corresponding mounting rim. The annular reinforcing structures 4 are typically known as "bead cores".

On the outer perimeter edge of the bead cores 4 a tapered elastomeric filler 5 is applied that occupies the space defined between the carcass ply or plies and the corresponding turned up side edge of the carcass ply or plies.

In an alternative embodiment, not illustrated, the carcass ply or plies has/have the opposite side edges thereof associated, without turning up, with special annular reinforcing structures provided with at least two annular inserts (preferably comprising metallic elongated elements).

As known, the area of the tyre comprising the bead core 4 and the filler 5 forms the so-called "bead", globally indicated in figure 1 with 15, intended to fix the tyre on a corresponding mounting rim, not shown.

In a radially outer position with respect to the carcass structure 2 a tread band 8 is provided, through which the tyre 1 makes contact with the ground. In preferred embodiments, the tread band 8 is made by elastomeric compounds comprising polybutadiene and/or polyisoprene (natural or synthetic) rubber, which improve mileage. Styrene-butadiene can be also used, in order to provide sufficient hysteresis to the compound. Carbon black and/or silica reinforcing fillers are also typically added to the elastomeric matrix.

An additional layer 7 of elastomeric material is arranged between the carcass structure 2 and the tread band 8. Such a layer preferably extends over a crown portion of the tyre 1, and may act as base layer for the cap tread band 8.

The tyre can also comprise a pair of sidewalls 3 applied to the side of the carcass structure 2 on axially opposite sides of the equatorial plane X-X. When present, the sidewalls extend from the tread band 8 to the region corresponding to the bead 15 of the tyre 1.

The tyre 1 of the present invention is characterised by a quite high transverse curvature.

The transverse curvature of a tyre can be defined by the particular value of the ratio between the distance ht (figure 1) of the top of the tread band from the line passing through the ends E of the tread band 8, measured on the equatorial plane X-X, and the line encompassing the distance C between said ends of the tread band (C/2 is shown in figure 1). Should the ends of the tread band not be easily identifiable, for example due to the lack of a precise reference like for example the edge indicated in figure 1 with E, the distance wt can certainly be assumed to correspond to the measurement of the maximum section width of the tyre.

The tyre 1 of the present invention preferably has a curvature ratio greater than or equal to about 0.2, preferably greater than or equal to about 0.25. Such a curvature ratio is typically smaller than or equal to about 0.8, preferably smaller than or equal to about 0.5. Typically, a tyre being adapted for fitting on a front wheel of a motorcycle has a greater curvature ratio than a tyre being adapted for fitting on a rear wheel of the motorcycle.

The tyre 1 has preferably a section width C comprised between about 70 and about 110 mm.

The tyre 1 has preferably a height H comprised between about 80% and about 110% of the section width.

The carcass structure 2 comprises a ply or plies preferably made from elastomeric material incorporating a plurality of reinforcing elements (not shown) arranged parallel to one another.

The reinforcing elements included in the carcass ply or plies preferably comprise textile cords selected from those usually adopted in the manufacture of carcasses for tyres, for example nylon, aramide, rayon, PET, PEN etc.. The elementary textile yarns may have a diameter ranging between about 0.35 mm and about 1.5 mm.

In the configuration shown in figure 1, the tyre comprises a carcass structure having two superimposed carcass plies 2a, 2b. The at least two carcass plies are made from elastomeric material and comprise a plurality of reinforcing elements (typically textile cords among those cited above) arranged so that the elements of a first carcass ply are oriented obliquely with respect to radial planes of the tyre (i.e. planes comprising the rotation axis of the tyre), whereas the cords of a second superimposed carcass ply also have an oblique orientation, but substantially symmetrically crossed with respect to the cords of the first carcass ply, in a crossed configuration. At least one of the carcass plies is associated with the bead cores 4 in the bead region 5 of the tyre (e.g. by a carcass turn-up).

In so-called radial structures (not shown), the reinforcing elements included in the carcass ply or plies lie substantially on radial planes of the tyre.

Optionally, the tyre may also comprise a belt structure (not shown in figure 1). The belt structure preferably comprises rubberized cords, arranged substantially parallel and side-by-side in the axial direction on the crown portion of the carcass structure, to form a plurality of coils. Such coils are substantially oriented according to the rolling direction of the tyre (typically with an angle of between about 0° and about 10°), such a direction usually being known as "at zero degrees" with reference to how it lies with respect to the equatorial plane of the tyre (or planes parallel to the equatorial plane). The aforementioned coils preferably extend over the entire crown portion of the carcass structure.

Preferably, the belt structure comprises windings of a single cord, or of a rubber tape comprising a number of cords arranged side-by-side, preferably up to five, wound in a spiral from one end to the other on the crown portion of the tyre, in a radially outer position with respect to the carcass structure.

Preferably, such cords are made through steel wires with a carbon content of at least about 0.7%-0.8%.

Alternatively or in combination to the presence of the zero degree layer, the belt structure can comprise at least two radially overlying layers, each made of elastomeric material reinforced with cords arranged parallel to one another. The layers are arranged in a crown portion of the tyre, in a radially outer position with respect to the carcass structure, so that the cords of the first belt layer are oriented obliquely with respect to the equatorial plane of the tyre, whereas the cords of the second layer also have an oblique orientation, but substantially symmetrically crossed with respect to the cords of the first layer, to form the so-called "cross-belt".

In this case, generally, the cords of the first and the second belt layers are generally textile cords, for example textile cords made from synthetic fibre, for example nylon, rayon, PEN, PET, preferably synthetic fibre with high modulus, in particular synthetic aramid fibre (for example Kevlar® fibres). Alternatively, hybrid cords can be used comprising at least one wire with low modulus, in other words with a modulus not greater than 15000 N/mm2 (for example nylon or rayon), interwoven with at least one wire with high modulus (for example Kevlar®), in other words with a modulus not smaller than 25000 N/mm2.

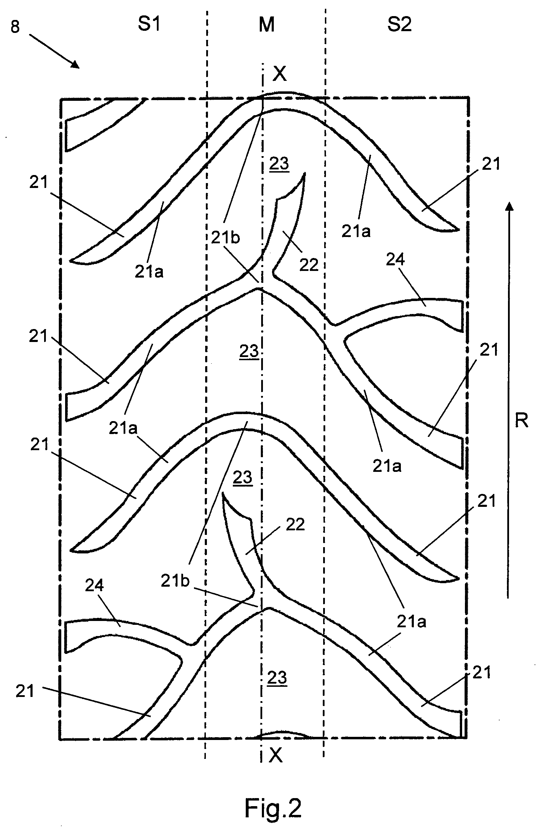

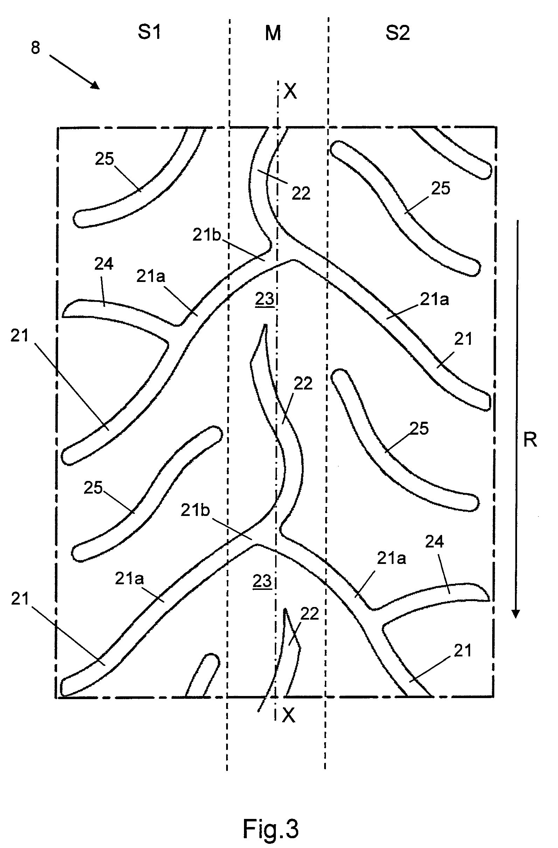

The tread band 8 has a tread pattern defined by a plurality of grooves variously distributed in the different areas of the tyre. Figure 2 and figure 3 show portions of exemplary tread patterns of the tyre 1 of the present invention.

As better illustrated in figure 2 and/or 3, in the tread band 8 it is possible to identify an annular central region M arranged across the equatorial plane X-X and two axially outer annular lateral regions S1, S2 arranged on axially opposite sides with respect to the annular central region M.

The annular central region M is defined in a central area of the tread band 8 intended to come into contact with the road surface when the motor vehicle travels in a straight line or slightly leaning, whereas the lateral regions S1, S2 are mainly defined in shoulder areas of the tread band 8, i.e. in those areas intended to come into contact with the road surface when the motorcycle turns a bend leaning to a greater extent.

In particular, the central region M of the tread band 8 may have a lateral extension comprised between about 10% and about 40% of the whole lateral extension of the tread band 8.

The pattern of the tread band 8 of the tyre of the present invention is defined by a plurality of grooves variously distributed along the circumferential and axial extension of the tread band 8.

Such grooves define a pattern that is replicated substantially with a certain pitch along the circumferential direction of the tyre. The tread pattern may define on said tread band a void to rubber ratio lower than about 20%. In other words, the total number of grooves is quite low, even if the tyre 1 is adapted for fitting on agile motorcycles having low engine displacement.

In order to trigger a good grip without the need of using special tread compounds having high hysteresis properties, it may preferable to provide grooves so as to obtain a void to rubber ratio greater than about 10%.

In particular, the tread pattern may define a void to rubber ratio lower than about 25% on the central region M of the tread band. This may improve stability of the tyres, particularly during straight running.

For example, in pratical embodiments realized and tested by the Applicant (see below), tyres having a tread pattern according to figures 2 and 3 had an overall void to rubber ratio of about 17%.

In more detail, figure 2 shows a portion of a tread pattern usable on a tyre adapted for fitting on a rear wheel of a motorcycle, whereas figure 3 shows a portion of a tread pattern usable on a tyre adapted for fitting on a front wheel of a motorcycle. A preferred rotation direction of motorcycle tyres carrying tread patterns according to the embodiments shown in figures 2 and 3 is referenced as R in the figures.

The same reference numbers in figure 2 and figure 3 identify similar or corresponding elements in both tread patterns.

The tread pattern comprises a plurality of first grooves 21. The first grooves 21 substantially continuously extend in transverse direction from the lateral region S1 to the lateral region S2. Particularly, the first grooves may extend substantially from one lateral end to the other lateral end of the tread band 8.

The first grooves 21 comprise at least a first portion 21 a having an inclination not higher than 60°. Preferably such first portions 21 a are located in an intermediate axial position of the tread band 8, in an axially inner position of the lateral tread portions S1, S2. For example, the portions 21 a may have an average inclination of about 45°.

The first grooves 21 also comprise at least a second portion 21b having an inclination higher than 50° located within the central portion M of the tread band 8. Preferably, such second portions 21b are located substantially at the equatorial plane (X-X) of the tyre.

As shown in figures 2 and 3, the first grooves 21 may be substantially U-shaped or V-shaped.

The tread pattern also comprises a plurality of second grooves 22. The second grooves 22 extend substantially in longitudinal direction within the central region M of the tread band 8.

The second grooves 22 are located between pairs of first grooves 21. As shown in the embodiment of figure 2, not necessarily the second grooves 22 are provided between every pair of first groves 21.

In the embodiment shown in figures 2 and 3, the second grooves 22 start from respective first grooves 21. In other words, one end of a second groove 22 joins with a respective first groove 21. The join may be an intermediate portion of the first groove 21 located within the central portion M of the tread band 8, preferably substantially at the equatorial plane X-X of the tyre.

In preferred embodiments, the second grooves 22 have portions which alternate on one side and on the other side of the equatorial plane X-X of the tyre along a longitudinal direction.

Solid portions 23 are located within the central region M (particularly in a region located across the equatorial plane X-X of the tyre) and alternate with said second grooves 22 in longitudinal direction. In such way, the second grooves 22 are interrupted along their longitudinal path, so that a continuous longitudinal groove is not formed within the central region M of the tread band 8.

The tread pattern shown in figures 2 and 3 also comprises a plurality of third grooves 24. The third grooves 24 extend in transverse direction within the lateral regions S1, S2 of the tread band 8. In particular, the third grooves 24 may extend in axially outer positions of the lateral regions S1, S2. In particular, an end of the third grooves 24 may be located substantially at the lateral end of the tread band 8.

The third grooves 24 may alternate between one lateral region S 1 and the other lateral region S2 of the tread band 8 along a longitudinal direction.

In the embodiments shown in figures 2 and 3, the third grooves 24 start from respective first grooves 21. The third grooves 24 may have an inclination higher than about 70° in at least one portion thereof. Preferably, the third grooves 24 have an inclination higher than about 70° substantially for their whole length. For example, an average inclination of the third grooves 24 can be about 75°.

The tread pattern shown in figure 3 also comprises a plurality of fourth grooves 25. The fourth grooves 25 extend in transverse direction within the lateral regions S1, S2 of the tread band 8.

The fourth grooves 25 may have an inclination comprised between about 20° and about 70°. In preferred embodiments, the fourth grooves 25 are located between two consecutive first grooves 21. In the embodiment shown in figure 3, the fourth grooves 25 extend substantially parallel to the circumferentially adjacent first grooves 21, with the lateral regions S1, S2 of the tread band 8.

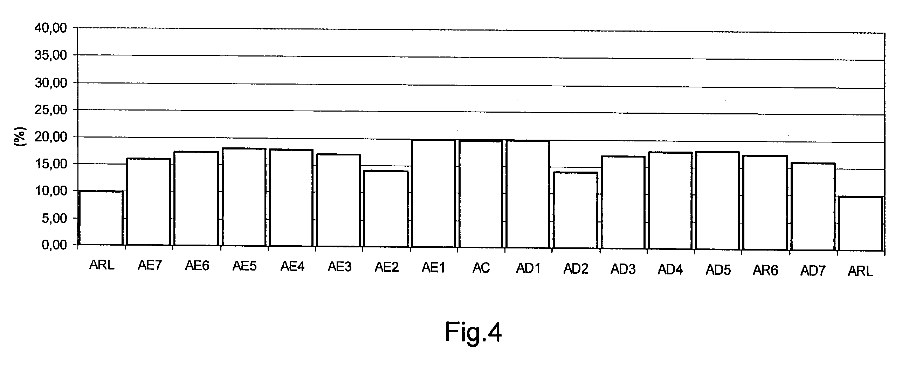

Figure 4 shows the variation of the void to rubber ratio within the tread patterns shown in figure 2. In particular, the void to rubber ratio has been evaluated in seventeen longitudinal regions extending along the whole circumference of the tyre. As it can be seen, in the central region M the void to rubber ratio is about 20%. Moreover, the variation of the void to rubber ratio in axial direction is quite flat. The overall void to rubber ratio of the tread pattern is about 17%.

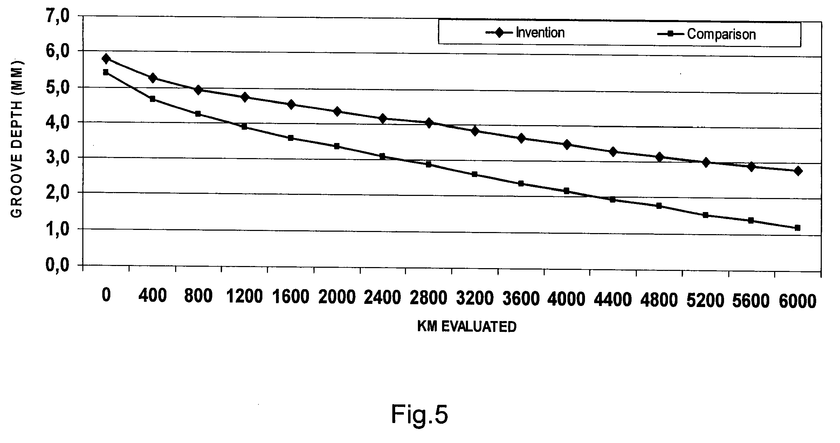

Figure 5 shows the result of a test of mileage evaluation, in which the consumption of a rear tyre according to the invention (having a tread pattern according to figure 2) was compared with the consumption of another rear tyre currently sold by the Applicant (PirelliTM ME22), having an overall void to rubber ratio of 21%, and particularly a void to rubber ratio of more than 30% in a central region of the tyre across the equatorial plane. More particularly, the test was performed by fitting two identical motorcycles Honda CG150 with rear tyres having size 90/90-18, inflated at a pressure of 29 psi. The motorcycles carried a load of 5 kg additional to the load of the driver. The two motorcycles made the same travel on an outdoor path at the same time. The result shown in figure 5 is presented as the groove depth versus the travelled distance. As it can be seen, the tyre according to the invention had a much lower consumption: on average, the tyre according to the invention travelled about 2000 km per mm of consumed groove depth, versus a value of about 1400 km per mm of consumed groove depth for the comparison tyre (i.e. an increase in mileage of about 40%).

Table 1 resumes the results of an outdoor test made for evaluating the performance on wet paves of the tyres of the invention. Front tyres having a tread pattern according to figure 3 and rear tyres having a tread pattern according to figure 2 were fitted on a motorcycle, and their performance was evaluated by an expert driver in comparison with the performance of the above mentioned PirelliTM ME22 tyres, currently sold by the Applicant. The two sets of tyres differed only in the tread pattern: no other changes (structure of the tyre, tread compounds etc.) were made.

**Table 1**

| Performance | Invention | Comparison |
|---|---|---|
| Front grip | 4 | 4 |
| Rear grip | 4 | 4 |
| Braking traction front | 4 | 4 |
| Braking traction rear | 3.90 | 3.80 |
| Front drainage | 4 straight running | 4 straight running |
| | 4 lean (small camber) | 4 lean (small camber) |
| | 3.8 lean (high camber) | 3.6 lean (high camber) |
| Rear drainage | 4 straight running | 4 straight running |
| | 4 lean (small camber) | 4 lean (small camber) |
| | 4 lean (high camber) | 3.7 lean (high camber) |
| Grip/drainage balance | 4 lean (small camber) | 4 lean (small camber) |
| | 4 lean (high camber) | 3.6 lean (high camber) |
| Front/rear drainage balance | 4 lean (small camber) | 4 lean (small camber) |
| | 4 lean (high camber) | 3.6 lean (high camber) |
| Keep of trajectory | 4 running | 3.8 running |
| | 4 acceleration | 3.8 acceleration |
| Safety feeling | 4 | 3.80 |

As it can be seen, the tyres of the invention surprisingly maintained the grip performance versus the comparison tyres (notwithstanding the much lower overall void to rubber ratio) and performed even well in draining the water out of the contact patch between the tyre and the wet surface. A higher safety feeling and a better stability were also noticed by the driver.

The above test results thus confirm the superiority of the tyres according to the invention.

## Claims

1. A motorcycle tyre (1) having a section width (C) comprised between 70 and 110 mm and a height (H) comprised between 80% and 110% of said section width (C), comprising a tread band (8) comprising a central region (M), a first and a second lateral regions (S1, S2), said central region (M) extending across an equatorial plane (X-X) of said tyre, said first and second lateral regions (S1, S2) extending laterally to said central region (M), said tread band (8) further comprising a tread pattern defining on said tread band (8) a void to rubber ratio lower than 20%, including:
- a plurality of first grooves (21) substantially continuously extending in transverse direction from said first to said second lateral region (S1, S2), wherein said first grooves (21) comprise at least a first portion (21a) having an inclination lower than or equal to 60°;
- a plurality of second grooves (22) extending substantially in longitudinal direction within said central region (M);
- a plurality of solid portions (23) located within said central region (M) and alternating with said second grooves (22) in longitudinal direction;
wherein at least some of said second grooves (22) start from a respective first groove (21) in such a way that one end of a second groove (22) joins with a respective first groove (21); the oin being in an intermediate portion of the first groove (21) located within the central portion (M) of the tread band (8).

2. A motorcycle tyre according to claim 1, wherein said central region (M) has a lateral extension comprised between 10% and 40% of the whole lateral extension of said tread band (8).

3. A motorcycle tyre according to claim 1 or 2, wherein said first grooves (21) extend substantially from a first end of said tread band (8) to a second end of said tread band (8).

4. A motorcycle tyre according to any one of the previous claims, wherein said first grooves (21) comprise at least a second portion (21b) having an inclination higher than 50° substantially at the equatorial plane (X-X) of the tyre.

5. A motorcycle tyre according to any one of the previous claims, wherein said tread pattern further comprises a plurality of third grooves (24) extending in transverse direction within said lateral regions (S1, S2).

6. A motorcycle tyre according to claim 5, wherein at least some of said third grooves (24) start from a respective first groove (21).

7. A motorcycle tyre according to claim 5 or 6, wherein said third grooves (24) have an inclination higher than 70° in at least one portion thereof.

8. A motorcycle tyre according to any one of the previous claims, wherein said tread pattern further comprises a plurality of fourth grooves (25) extending in transverse direction within said lateral regions (S1, S2).

9. A motorcycle tyre according to claim 8, wherein said fourth grooves (25) have an inclination comprised between 20° and 70°.

10. A motorcycle tyre according to any one of the previous claims, wherein said tread pattern defines a void to rubber ratio lower than 25% on said central region (M) of said tread band (8).

11. A motorcycle tyre according to any one of the previous claims, wherein said tread pattern defines on said tread band (8) a void to rubber ratio greater than 10%.

## Patentansprüche

1. Motorradreifen (1) mit einer Schnittbreite (C) zwischen 70 und 110 mm und einer Höhe (H) zwischen 80 % und 110 % der Schnittbreite (C), umfassend einen Laufflächenring (8) mit einem Zentralbereich (M), einem ersten und zweiten Seitenbereich (S1, S2), wobei sich der Zentralbereich (M) über eine Äquatorialebene (X-X) des Reifens erstreckt, wobei sich der erste und zweite Seitenbereich (S1, S2) seitlich von dem Zentralbereich (M) erstrecken, wobei der Laufflächenring (8) des Weiteren ein Laufflächenprofil umfasst, das auf dem Laufflächenring (8) ein Verhältnis von negativen und positiven Profilanteilen von weniger als 20 % definiert, das Folgendes umfasst:
- eine Vielzahl von ersten Nuten (21), die sich im Wesentlichen durchgehend in der Querrichtung von dem ersten zu dem zweiten Seitenbereich (S1, S2) erstrecken, wobei die ersten Nuten (21) zumindest einen ersten Abschnitt (21a) mit einer Neigung von unter oder gleich 60° umfassen;
- eine Vielzahl von zweiten Nuten (22), die sich im Wesentlichen in der Längsrichtung innerhalb des Zentralbereichs (M) erstrecken;
- eine Vielzahl von massiven Abschnitten (23), die innerhalb des Zentralbereichs (M) angeordnet sind und sich mit den zweiten Nuten (22) in der Längsrichtung abwechseln;
wobei zumindest einige der zweiten Nuten (22) so an einer jeweiligen ersten Nut (21) beginnen, dass ein Ende einer zweiten Nut (22) sich mit einer ersten Nut (21) vereinigt; wobei die Vereinigung in einem mittleren Abschnitt der ersten Nut (21) liegt, der innerhalb des Zentralbereichs (M) des Laufflächenrings (8) angeordnet ist.

2. Motorradreifen nach Anspruch 1, wobei der Zentralbereich (M) eine seitliche Ausdehnung von zwischen 10 % und 40 % der gesamten seitlichen Ausdehnung des Laufflächenrings (8) aufweist.

3. Motorradreifen nach Anspruch 1 oder 2, wobei die ersten Nuten (21) sich im Wesentlichen von einem ersten Ende des Laufflächenrings (8) zu einem zweiten Ende des Laufflächenrings (8) erstrecken.

4. Motorradreifen nach einem der vorhergehenden Ansprüche, wobei die ersten Nuten (21) zumindest einen zweiten Abschnitt (21b) mit einer Neigung von mehr als 50° im Wesentlichen an der Äquatorialebene (X-X) des Reifens umfassen.

5. Motorradreifen nach einem der vorhergehenden Ansprüche, wobei das Laufflächenprofil des Weiteren eine Vielzahl von dritten Nuten (24) umfasst, die sich in der Querrichtung innerhalb der Seitenbereiche (S1, S2) erstrecken.

6. Motorradreifen nach Anspruch 5, wobei zumindest einige der dritten Nuten (24) an einer jeweiligen ersten Nut (21) beginnen.

7. Motorradreifen nach Anspruch 5 oder 6, wobei die dritten Nuten (24) in zumindest einem Abschnitt davon eine Neigung von mehr als 70° aufweisen.

8. Motorradreifen nach einem der vorhergehenden Ansprüche, wobei das Laufflächenprofil des Weiteren eine Vielzahl von vierten Nuten (25) umfasst, die sich in der Querrichtung innerhalb der Seitenbereiche (S1, S2) erstrecken.

9. Motorradreifen nach Anspruch 8, wobei die vierten Nuten (25) eine Neigung von zwischen 20° und 70° aufweisen.

10. Motorradreifen nach einem der vorhergehenden Ansprüche, wobei das Laufflächenprofil ein Verhältnis von negativen und positiven Profilanteilen von unter 25 % an dem Zentralbereich (M) des Laufflächenrings (8) definiert.

11. Motorradreifen nach einem der vorhergehenden Ansprüche, wobei das Laufflächenprofil an dem Laufflächenring (8) ein Verhältnis von negativen und positiven Profilanteilen von mehr als 10 % definiert.

## Revendications

1. Pneu de motocycle (1) ayant une largeur de section (C) comprise entre 70 et 110 mm et une hauteur (H) comprise entre 80% et 110% de ladite largeur de section (C), comprenant une bande de roulement (8) qui comprend une région centrale (M), des première et deuxième régions latérales (S1, S2), ladite région centrale (M) s'étendant sur un plan équatorial (X-X) dudit pneu, lesdites première et deuxième régions latérales (S1, S2) s'étendant latéralement vers ladite région centrale (M), ladite bande de roulement (8) comprenant en outre une sculpture de bande de roulement définissant sur ladite bande de roulement (8) un rapport vide sur caoutchouc inférieur à 20%, comportant :
- une pluralité de premières rainures (21) s'étendant de manière essentiellement continue dans la direction transversale depuis ladite première région vers ladite deuxième région des régions latérales (S1, S2), où lesdites premières rainures (21) comprennent au moins une première partie (21a) ayant une inclinaison inférieure ou égale à 60° ;
- une pluralité de deuxièmes rainures (22) s'étendant essentiellement dans la direction longitudinale à l'intérieur de ladite région centrale (M) ;
- une pluralité de parties solides (23) situées à l'intérieur de ladite région centrale (M) et en alternance avec lesdites deuxièmes rainures (22) dans la direction longitudinale ;
où au moins certaines desdites deuxièmes rainures (22) partent d'une première rainure respective (21) de telle manière qu'une extrémité d'une deuxième rainure (22) soit reliée à une première rainure respective (21) ; la liaison étant dans une partie intermédiaire de la première rainure (21) située à l'intérieur de la partie centrale (M) de la bande de roulement (8).

2. Pneu de motocycle selon la revendication 1, dans lequel ladite région centrale (M) a une extension latérale comprise entre 10% et 40% de toute l'extension latérale de ladite bande de roulement (8).

3. Pneu de motocycle selon la revendication 1 ou 2, dans lequel lesdites premières rainures (21) s'étendent essentiellement depuis une première extrémité de ladite bande de roulement (8) vers une deuxième extrémité de ladite bande de roulement (8).

4. Pneu de motocycle selon l'une quelconque des revendications précédentes, dans lequel lesdites premières rainures (21) comprennent au moins une deuxième partie (21b) ayant un e inclinaison supérieure à 50° essentiellement au niveau du plan équatorial (X-X) du pneu.

5. Pneu de motocycle selon l'une quelconque des revendications précédentes, dans lequel ladite sculpture de bande de roulement comprend en outre une pluralité de troisièmes rainures (24) s'étendant dans la direction transversale à l'intérieur desdites régions latérales (S1, S2).

6. Pneu de motocycle selon la revendication 5, dans lequel au moins certaines desdites troisièmes rainures (24) partent d'une première rainure respective (21).

7. Pneu de motocycle selon la revendication 5 ou 6, dans lequel lesdites troisièmes rainures (24) ont une inclinaison supérieure à 70° dans au moins une partie de celles-ci.

8. Pneu de motocycle selon l'une quelconque des revendications précédentes, dans lequel ladite sculpture de bande de roulement comprend en outre une pluralité de quatrièmes rainures (25) s'étendant dans la direction transversale à l'intérieur desdites régions latérales (S1, S2).

9. Pneu de motocycle selon la revendication 8, dans lequel lesdites quatrièmes rainures (25) on t une inclinaison comprise entre 20° et 70°.

10. Pneu de motocycle selon l'une quelconque des revendications précédentes, dans lequel ladite sculpture de bande de roulement définit un rapport vide sur caoutchouc inférieur à 25% sur ladite région centrale (M) de ladite bande de roulement (8).

11. Pneu de motocycle selon l'une quelconque des revendications précédentes, dans lequel ladite sculpture de bande de roulement définit sur ladite bande de roulement (8) un rapport vide sur caoutchouc supérieur à 10%.
